# EUROPÄISCHE PATENTSCHRIFT

(11) **EP 3 501 962 B1**
(45) Veröffentlichungstag und Bekanntmachung des Hinweises auf die Patenterteilung: **13.07.2022**
(21) Anmeldenummer: 18000906.0
(22) Anmeldetag: 16.11.2018
(51) Int. Cl.: F16H 55/30, B62M 9/10, B62M 9/02

(54) **EINFACH-KETTENRAD**
SINGLE CHAIN WHEEL
ROUE DENTÉE SIMPLE

(30) Priorität: 22.12.2017 DE 102017012035
(43) Veröffentlichungstag der Anmeldung: 26.06.2019
(73) Patentinhaber: SRAM Deutschland GmbH, 97424 Schweinfurt (DE)
(72) Erfinder: Hanke, Joachim, 04317 Leipzig (DE)

(56) Entgegenhaltungen:
- EP-A2- 1 652 767
- WO-A1-2016/129689
- DE-A1-102015 000 715
- DE-U1-202017 002 445

## Beschreibung

Kettenantriebe in Fahrrädern haben schon eine lange Entwicklungsgeschichte hinter sich. Entsprechend sich ändernder Anforderungen waren dabei immer wieder unterschiedliche Erfordernisse zu erfüllen.

Ausgangspunkt war ein Eingang-Kettenantrieb mit einem Einfach-Kettenrad (vorderes Kettenrad) an der Tretkurbel in Kombination mit einem Einfach-Ritzel (hinteres Kettenrad) an der Nabe am Hinterrad, wobei die Kopplung von vorderem und hinterem Kettenrad mittels einer Rollenkette erfolgte.

Dieses Konzept wurde bei Mehrgang-Antrieben mit Umschalt-Einrichtungen zum Umlegen der Rollenkette (vorderer Kettenwerfer und hinteres Schaltwerk) zwischen benachbarten Kettenrädern grundsätzlich beibehalten. Die Umschalteinrichtungen wurden mit Kettenspann-Einrichtungen ergänzt. Die Anforderungen zum sicheren Eingreifen der Rollenkette an den Zähnen der Kettenräder erhöhten sich infolge des Kettenschräglaufs zwischen der Mehrzahl von axial nebeneinander angeordneten vorderen Kettenrädern einerseits und hinteren Kettenrädern andererseits.

In Verbindung mit der Einführung und Weiterentwicklung von Mountain-Bikes (MTB) wurde die Anzahl von vorderen Kettenrädern bis auf drei ausgedehnt. Der Kettenschräglauf erhöhte sich dabei entsprechend.

In jüngster Zeit wurden Kettenantriebe dahingehend abgewandelt, dass sie lediglich über ein einziges vorderes Kettenrad (Einzelkettenblatt oder -rad) verfügen müssen. Dazu waren Detaillösungen notwendig, wie eine Zahngeometrie mit alternierenden dicken und dünnen Zähnen, die auch ohne eine vorhandene Kettenführung eines vorderen Kettenwerfers auskommt und dennoch ein sehr sicheres Eingreifen der Rollenkette am vorderen Kettenrad ermöglicht.

Um dennoch eine erforderliche Spreizung der zur Verfügung stehenden Gänge zu erreichen, kommen Mehrfach-Ritzelanordnungen mit einer großen Anzahl von 11, 12 oder 13 Ritzeln zum Einsatz. Es werden sehr große Ritzel mit um die 50 Zähne eingesetzt, die den Bauraum ausnutzen, der infolge der geneigten Erstreckung der Speichen zwischen dem inneren Nabenflansch und der äußeren Felge zur Verfügung steht. Die großen Ritzel dieser Mehrfach-Ritzelanordnung sind im Vergleich zu herkömmlichen Anordnungen sehr weit innen - in Richtung der Nabenmitte oder Rahmenmitte - angeordnet.

Für eine ideale Kettenlinie befinden sich das vordere Einzel-Kettenblatt und das Ritzel in derselben geometrischen Ebene, so dass die Kette keinen Schräglauf erfährt. In diesem Idealzustand wäre der Kettenverschleiß minimal und der Wirkungsgrad des Antriebsstranges maximal. Dieser Zustand kann jedoch nicht für jedes Ritzel der Mehrfach-Ritzelanordnung hergestellt werden. Auf den kleinsten und größten Ritzeln ist der Kettenschräglauf besonders groß.

Die kleinen Ritzel der Mehrfach-Ritzelanordnung sind axial weiter außen als die großen Ritzel angeordnet. Umgekehrt sind die großen Ritzel axial weiter innen als die kleinen Ritzel angeordnet. In radialer Richtung sind die Zähne außen am Ritzel und am Kettenrad angeordnet. Das Profil zur Drehmomentübertragung ist radial innen am Ritzel und/oder am Kettenrad angeordnet.

Die vorderen Einzel-Kettenräder sind im Vergleich zu den in Mehrfach-Anordnungen vorhandenen großen Kettenrädern vergleichsweise klein und damit relativ stabil. Diesem Stabilitätsvorteil stehen aber größere Kettenzugskräfte gegenüber, die infolge des geänderten Übersetzungsverhältnisses zwischen beibehaltener Kurbellänge und reduziertem Kettenraddurchmesser entstehen können.

Bei nicht ausreichender Steifigkeit des Kettenrades, wie zum Beispiel beim Anliegen von sehr großen Kettenzugkräften, kann das Kettenrad seitlich ausknicken und wird dabei zerstört. Dieses Problem verstärkt sich, wenn der Kettenschräglauf erhöht wird, zum Beispiel durch eine axiale Verlagerung der größten Ritzel nach axial innen, hin zu den Speichen des hinteres Laufrades im Zuge einer Erhöhung der Anzahl der Ritzel. Die Kettenzugkräfte infolge des hohen Kettenschräglaufs sind besonders groß, wenn die Kette mit einem der großen, weit innenliegenden Ritzel in Eingriff steht. Hier ist die Gefahr des Abknickens des Kettenblatts am Größten.

Bei der Auslegung der Kettenblätter müssen einerseits die gestiegenen Stabilitätsanforderungen und andererseits die nunmehr bestehenden Leichtbau-Erfordernisse berücksichtigt werden. Hier spielt sowohl die Materialwahl (Gewicht und Festigkeit), als auch die Geometrie (Steifigkeit) eine Rolle.

Die Kettenzugkraft wird an den Zähnen des Kettenrades in der Zahnmittelebene in die Zähne eingeleitet, wobei die Richtung der Kettenzugkraft infolge des Kettenschräglaufes zu einem hinteren Ritzel eines Mehrfach-Ritzelsatzes nicht parallel zu der Zahnmittelebene ist.

Einerseits soll die Zahnmittelebene des Kettenrads, um den Kettenschräglauf einzuschränken, möglichst mittig zum Mehrfach-Ritzelsatz angeordnet sein. Andererseits ist der Nabenbereich des Kettenrads aufgrund von vorgegebenen Rahmen- und Kurbelanschlussmaßen nicht frei variierbar. Dies führt dazu, dass das Kettenrad einen Versatz (offset) in axialer Richtung zwischen seiner Nabenmittelebene und seiner Zahnmittelebene aufweist. Insbesondere ist die Zahnmittelebene relativ zu der Nabenmittelebene nach innen versetzt.

Bei bekannten Kettenrädern (Vorgänger-Kettenräder von SRAM) besteht zwischen der Zahnmittelebene und der Mittelebene durch den radial inneren Nabenbereich (Nabenmittelebene) des Kettenrades ein axialer Versatz. Dieser Versatz ergibt sich zwangsläufig, weil andere Konstruktionsmaße vorgegeben sind (Standard) und die Abwandlungen bei verschiedenen Anschlussbedingungen am Kettenrad umgesetzt werden. So kann man einerseits ein genormtes Maß für den gegenständlichen axialen Anschlag an der Kurbel für das Kettenrad einhalten und andererseits trotzdem dem Erfordernis nach unterschiedlich großen Maßen für die Kettenlinie entsprechen. Der gewählte Versatz hängt von mehreren Faktoren, wie der eingesetzten Mehrfach-Ritzelanordnung, deren axiale Positionierung gegenüber dem Kettenblatt, den Rahmenmaßen, der Nabenbreite und dem verwendetem Kurbelstandard ab.

Dieser Versatz in axialer Richtung zwischen der Zahnmittelebene und der Nabenmittelebene erhöht die Anfälligkeit zum Abknicken des Kettenrades weiter. Die Anforderungen an die Stabilität des Kettenrades werden mit der Erhöhung der Zähnezahl und somit der Vergrößerung des Kettenraddurchmessers aufgrund des sich vergrößernden Hebels weiter erhöht.

Es stellt sich die Aufgabe, ein Kettenrad bereit zu stellen, das die genannten Anforderungen erfüllt. Das Kettenrad soll über eine ausreichende Stabilität, geringes Gewicht und gute Kettenführungseigenschaften verfügen und muss dabei auch den vorgegebenen Bauraum berücksichtigen.

Diese Aufgabe wird durch ein Einzel-Kettenrad nach Anspruch 1 gelöst.

Das Einfach-Kettenrad ist zur Montage an einer um eine Drehachse drehbar gelagerten Tretkurbel eines Fahrrades und zum Eingriff in eine Fahrradkette mit Ketteninnenlaschenpaaren und Kettenaußenlaschenpaaren geeignet. Das Kettenrad weist eine axiale Außenseite und eine axiale Innenseite auf. Weiter weist das Kettenrad einen Nabenbereich mit einem Innenprofil am radial inneren Ende des Kettenrades zur Drehmomentübertragung von der Tretkurbel auf das Kettenrad auf.

Der Nabenbereich definiert eine axiale Nabenmittelebene zwischen einer Nabenaußenebene und einer Nabeninnenebene. Das Kettenrad weist weiter einen Zahnbereich mit einer Vielzahl von Zähnen an einem radial äußeren Ende des Kettenrades zum Eingriff in die Fahrradkette auf.

Der Zahnbereich definiert eine axiale Zahnmittelebene zwischen einer Zahnaußenebene und einer Zahninnenebene. Die Zahninnenebene ist durch die in axialer Richtung am weitesten innen liegenden Oberflächen der Vielzahl von Zähnen definiert. Weiter weist das Kettenrad einen Verbindungsbereich auf, der sich in radialer Richtung zwischen dem Nabenbereich und dem Zahnbereich des Kettenrades erstreckt und diese miteinander verbindet. Der Verbindungsbereich definiert eine Verbindungsmittelebene zwischen einer Verbindungsaußenebene und einer Verbindungsinnenebene. Die Verbindungsinnenebene ist durch die in axialer Richtung am weitesten innen liegenden Oberflächen des Verbindungsbereichs definiert. Die Zahnmittelebene verläuft in axialer Richtung nach innen versetzt zu der Nabenmittelebene, wobei zur Erhöhung der Steifigkeit des Kettenrades die Verbindungsinnenebene des Verbindungsbereichs in axialer Richtung nach innen versetzt zu der Zahninnenebene des Zahnbereichs verläuft.

Es hat sich gezeigt, dass die Stabilität des Kettenrades merklich erhöht werden kann, wenn die Verbindungsinnenebene zur Vergrößerung des tragenden Querschnittes im Verbindungsbereich einseitig nach axial innen größer dimensioniert wird. Gerade wenn die Verbindungsinnenebene axial innerhalb der Zahninnenebene verläuft, also der Querschnitt des Verbindungsbereichs in axialer Richtung bis über die Zahninnenebene reicht, ist die Steifigkeit besonders hoch.

Erfindungsgemäß wird der Verbindungsbereich von einer Mehrzahl von Armen gebildet. Die Mehrzahl von Armen erstreckt sich vom Nabenbereich zum Zahnbereich und verbindet diese miteinander.

Der nicht erfindungsgemäße Verbindungsbereich könnte auch geschlossen oder geschlossen mit Durchbrüchen ausgebildet sein. Die erfindungsgemäße Ausführungsform mit einer Mehrzahl von Armen ohne Material zwischen den Armen ist besonders leichtgewichtig.

Insbesondere die Anordnung von Armen im Verbindungsbereich des Kettenrades außerhalb der Totpunkte der Kurbelanordnung hat sich als effektiv erwiesen. In den Bereichen des Kettenblattes, an denen hohe Kräfte von der Kurbel über das Kettenrad auf die Kette übertragen werden, muss das Kettenblatt besonders stabil ausgebildet sein. Hier werden die Arme angeordnet. Die weniger belasteten Bereiche des Kettenblatts in den beiden Totpunkten der Kurbelanordnung können frei von Armen bleiben. Auf diese Weise kann weiter Gewicht gespart werden.

Gemäß der Erfindung des Kettenrades sind die Arme im Querschnitt profilträgerförmig ausgebildet. Insbesondere weisen die Arme einen dünnwandigen offenen Querschnitt 42 auf. Die Wandstärke bzw. Materialstärke des Querschnitts ist relativ zu der axialen Breite des Verbindungsbereichs gering. Mit Querschnitt ist das Profil der Arme gemeint. Dieses Profil soll in erster Linie dünnwandig ausgebildet sein. Welche Form das Profil aufweist ist zweitrangig.

Gemäß einer Ausführungsform ist der Querschnitt der Arme im Wesentlichen u-förmig ausgebildet. Das u-förmige Profil weist insbesondere eine erste und zweite Profilwand und einen Profilboden auf, deren Materialstärke im Vergleich zur axialen Breite des Verbindungsbereichs gering bemessen ist.

Gemäß einer Ausführungsform ist der u-förmige Querschnitt zur Außenseite des Kettenrades hin offen und zur Innenseite des Kettenrades hin geschlossen. Der geschlossene Profilboden des Querschnitts bildet gleichzeitig auf der Innenseite des Kettenblatts den Überhang über die Zahninnenebene hinaus.

Der dünnwandige offene Querschnitt des Verbindungsbereichs erlaubt zum einen eine einfache Fertigung durch Fräsen, zum anderen gewährleistet das Verhältnis aus vergrößerter Profilbreite und geringer Materialstärke eine gleichermaßen stabile, als auch leichte Konstruktion.

Gemäß einer Ausführungsform des Kettenrades umfasst die Vielzahl von Zähnen eine erste Gruppe von Zähnen und eine zweite Gruppe von Zähnen.

Insbesondere weist die erste Gruppe von Zähnen eine erste axiale Breite und die zweite Gruppe von Zähnen eine zweite axiale Breite auf. Die zweite axiale Breite ist größer, als die erste axiale Breite. Insbesondere ist die erste axiale Breite der ersten Gruppe von Zähnen geringer als ein Ketteninnenlaschenabstand eines Ketteninnenlaschenpaares bemessen. Die zweite axiale Breite der zweiten Gruppe von Zähnen ist größer als der Ketteninnenlaschenabstand und kleiner als ein Außenlaschenabstand eines Außenlaschenpaares bemessen. Die dicken und dünnen Zähne verbessern die Kettenführung.

Gemäß einer Ausführungsform weisen die Zähne der zweiten Gruppe von Zähnen jeweils einen axialen Vorsprung auf, welcher sich in radialer Richtung von der Zahnspitze über den Zahnfuß bis über den Fußkreisdurchmesser hinweg erstreckt. Die in radialer Richtung langgezogene Ausbildung des Vorsprungs verleiht dem Zahn mehr Stabilität.

Der Fußkreis ist eine gedachte Linie, die tangential zum Zahngrund verläuft.

Gemäß einer Ausführungsform des Kettenrads ist der Vorsprung an den Zähnen der zweiten Gruppe von Zähnen jeweils an der Außenseite und/oder an der Innenseite ausgebildet. Das heißt, es ist entweder ein Vorsprung auf der axialen Außenseite des Zahnes, oder auf der axialen Innenseite des Zahnes, oder an beiden Seiten des Zahnes ausgebildet.

Die Vorsprünge können entweder durch Materialabtrag in den übrigen Bereichen, oder durch Materialauftrag im Bereich der Vorsprünge hergestellt werden.

Gemäß einer Ausführungsform des Kettenrades sind die Zähne der ersten Gruppe in radialer Richtung kürzer als die Zähne der zweiten Gruppe ausgebildet. Umgekehrt sind die Zähne der zweiten Gruppe länger als die Zähne der ersten Gruppe.

Insbesondere sind die Zähne der zweiten Gruppe sowohl in axialer Richtung, als auch in radialer Richtung größer bemessen, als die Zähne der zweiten Gruppe. Die Ausführungsform gewährleistet eine besonders gute Kettenführung, wie sie bei einem starken Kettenschräglauf notwendig ist.

### Kurzbeschreibung der Zeichnungen:

- Fig. 1: Seitenansicht eines Fahrrads
- Fig. 2: Schematische Darstellung eines erfindungsgemäßen Fahrradantriebs
- Fig. 3: Schematische Darstellung der Kettenlinie
- Fig. 4: Schematische Darstellung eines in eine Kette eingreifenden Kettenrads
- Fig. 5: Draufsicht auf eine Kette
- Fig. 6a: Perspektivische Außenansicht des an der Tretkurbel montierten Einzelkettenblatts
- Fig. 6b: Außenansicht des an der Tretkurbel montierten Einzelkettenblatts
- Fig. 7: Vergrößerte Schnittdarstellung A-A aus Fig. 6b
- Fig. 8a: Vergrößerte Schnittdarstellung C-C aus Fig. 6b
- Fig. 8b: Detail aus Schnittdarstellung Fig. 8a
- Fig. 9: Vergrößerte Schnittdarstellung durch Kettenradanordnung aus Fig. 6b
- Fig. 10a: Perspektivische Außenansicht des Kettenblatts
- Fig. 10b: Perspektivische Innenansicht des Kettenblatts
- Fig. 10c: Außenansicht des Kettenblatts
- Fig. 10d: Innenansicht des Kettenblatts

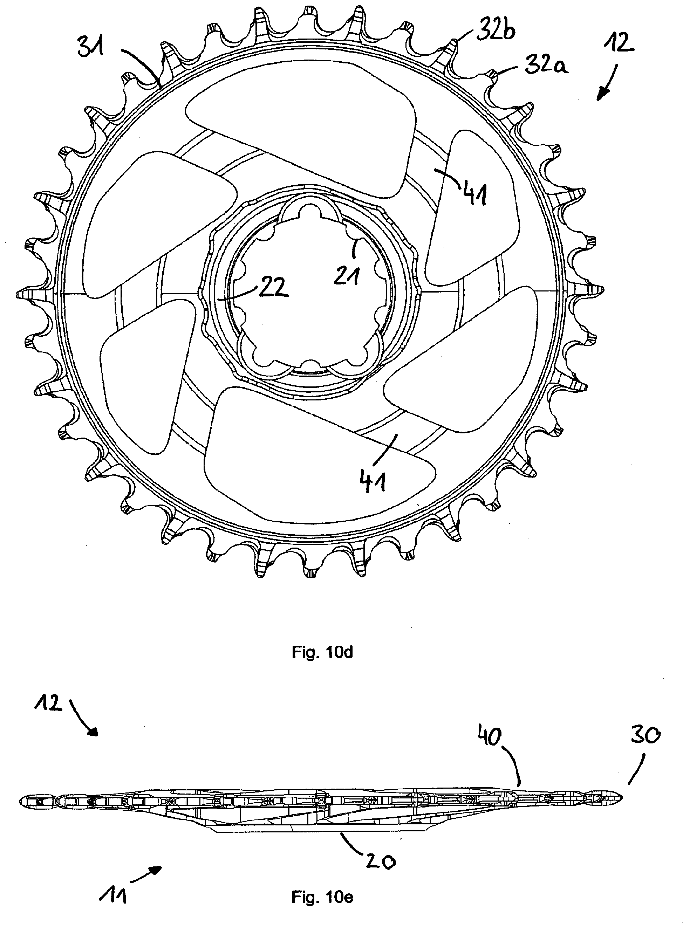

- Fig. 10d: Draufsicht auf das Kettenblatt

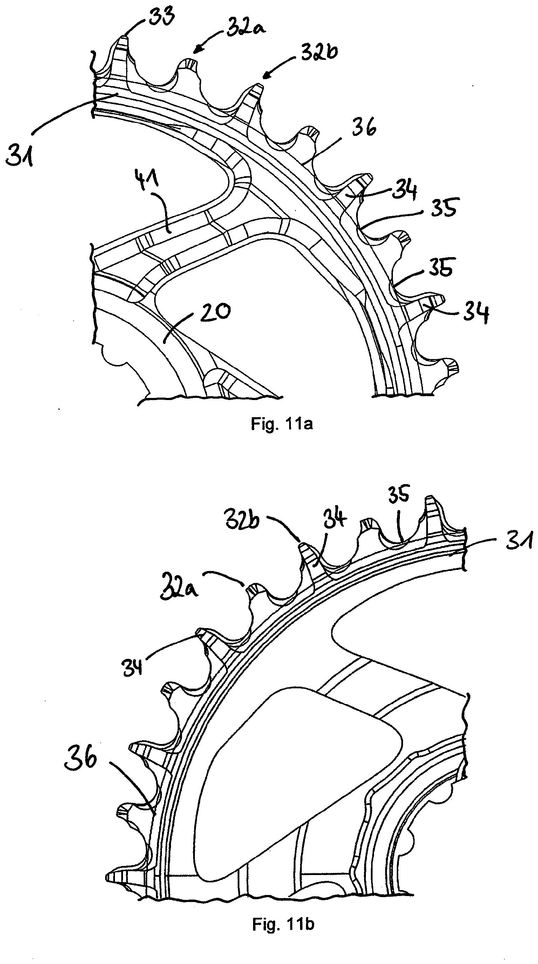

- Fig. 11a: Außenansicht eines vergrößerten Teilausschnitts des Kettenblatts
- Fig. 11b: Innenansicht des vergrößerten Teilausschnitts

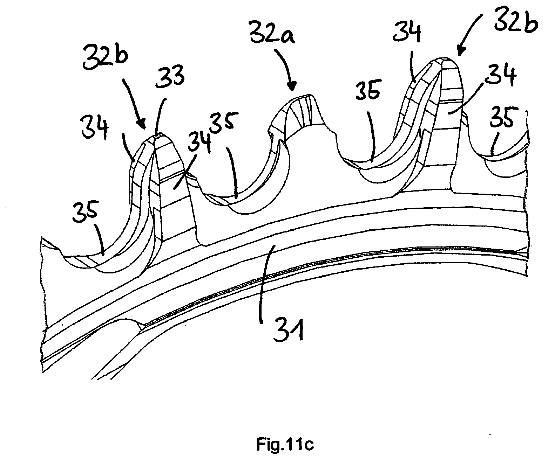

- Fig. 11c: Perspektivische Außenansicht eines Teilausschnitts

### Detaillierte Beschreibung der bevorzugten Ausführungsformen

Die im Folgenden verwendeten Richtungsangaben vorne und hinten beziehen sich auf ein Fahrrad in Fahrtrichtung. Axial außen und axial innen beziehen sich auf die Außen- und Innenseite des Kettenblatts in seiner für die Montage vorgesehenen Ausrichtung. Die Außenseite eines an der vorderen, rechten Tretkurbel montierten Kettenblatts weist nach außen, also vom Rahmen weg. Die Innenseite des Kettenblatts weist nach innen, also zum Rahmen hin. Axial bezieht sich auf die Drehachse A des Kettenblatts bzw. der gesamten Tretkurbelanordnung. Die Zähne sind radial außen am Kettenblatt angeordnet. Der Außendurchmesser des Kettenblatts ist das radial äußere Ende. Der Innendurchmesser das radial innere Ende des Kettenblatts. Die Figuren zeigen Ansichten in verschiedenen Maßstäben.

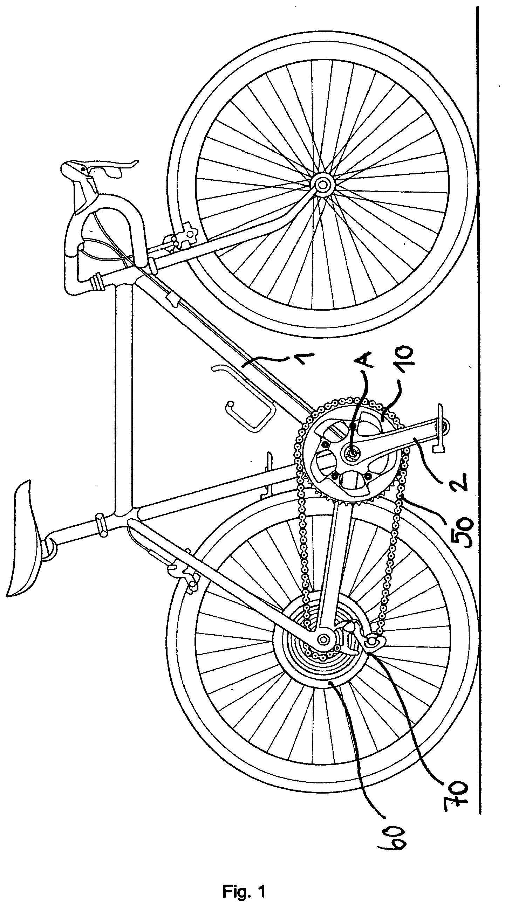

Figur 1 zeigt exemplarisch ein herkömmliches Fahrrad mit einem Fahrradrahmen 1 und einem Fahrradantrieb, bestehend aus einem vorderen Kettenblatt 10, das an der rechten Fahrradkurbel 2 montiert ist, einer Mehrfach-Ritzelanordnung 60 und einer Fahrradkette 50. Die vordere Tretkurbelanordnung, bestehend aus dem Kettenblatt 10 und der Tretkurbel 2, dreht sich um die Drehachse A. Die Mehrfach-Ritzelanordnung 60 umfasst eine erhöhte Anzahl von benachbarten Ritzeln, insbesondere zwölf Ritzeln, die hier nur schematisch dargestellt sind. Die Fahrradkette 50 steht mit den Zähnen des Kettenblatts 10 und den Zähnen eines der Ritzel der Mehrfach-Ritzelanordnung 60 in Eingriff. Mittels der Fahrradkette 50 wird Kraft von der vorderen Tretkurbelanordnung auf die hintere Mehrfach-Ritzelanordnung 60 und von dort über den Antreiber auf die Hinterradnabe übertragen. Das Schaltwerk 70 kann entweder mechanisch, oder elektrisch angesteuert werden. Die Darstellung in Figur 1 soll die Zuordnung der Teile verdeutlichen. Das schematisch gezeigte Kettenrad 10 kann sich von der erfindungsgemäßen Ausführungsform unterscheiden.

Das erfindungsgemäße Kettenblatt ist nicht nur für ein dargestelltes Rennrad geeignet, sondern kann an einer Vielzahl von Fahrradtypen, wie Mountainbikes, Tourenräder oder E-Bikes zum Einsatz kommen. Je nach Antriebsart sind auch Kettenblätter mit anderen Zähnezahlen, als die in den folgenden Figuren dargestellten, möglich. Insbesondere Einzel-Kettenblätter mit 30, 32, 34, 36 oder 38 Zähnen sind gängige Ausführungsformen. Für einen Antrieb mit nur einem vorderen Kettenblatt und dreizehn hinteren Ritzeln sind insbesondere neun, zehn oder elf Zähne auf dem kleinsten Ritzel und 36 Zähne auf dem größten Ritzel möglich.

Antriebe für Mountainbikes verfügen üblicherweise über eine noch größere Spreizung der Ritzel. Bei Ritzel-Anordnungen mit zwölf Ritzeln stellen zehn Zähne am kleinsten Ritzel und 50 Zähne am größten Ritzel oder elf Zähne am kleinsten und 55 Zähne am größten Ritzel eine sinnvolle Spreizung dar.

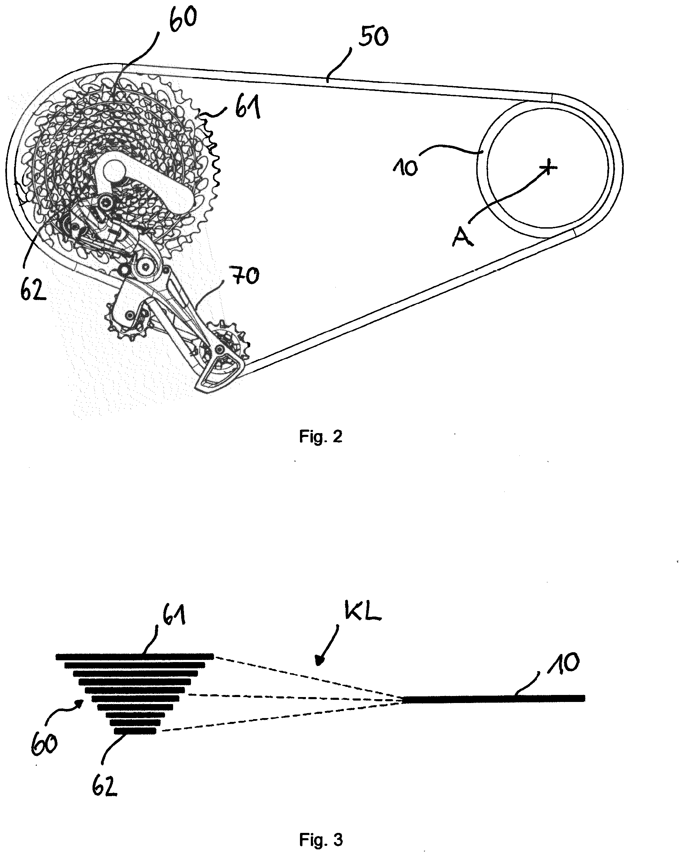

Figur 2 zeigt eine schematische Darstellung eines Fahrradantriebs. Die vordere Kettenblatt-Anordnung umfasst ein einzelnes Kettenblatt 10, welches sich um eine Drehachse A dreht. Die Mehrfach-Ritzelanordnung 60 umfasst zwölf Ritzel mit einem größten Ritzel 61 mit 50 Zähnen und einem kleinsten Ritzel 62 mit 10 Zähnen. In dem gezeigten Zustand steht die Fahrradkette 50 mit den Zähnen des Kettenblatts 10 und mit den Zähnen des größten Ritzels 62 der Mehrfach-Ritzelanordnung 60 in Eingriff. Das Schaltwerk 70 bewegt die Fahrradkette 50 beim Schalten von einem Ritzel auf ein benachbartes Ritzel. Das Schaltwerk kann dabei entweder mechanisch, oder elektrisch bedient werden. Im gezeigten Ausführungsbeispiel mit nur einem Kettenblatt 10 entfällt der vordere Umwerfer.

Figur 3 zeigt zur Verdeutlichung der verschiedenen Kettenlinien KL eine weitere schematische Darstellung eines Fahrradantriebs. Das Kettenblatt 10 ist im Verhältnis zur Mehrfach-Ritzelanordnung 60 so ausgerichtet, dass ein neutraler Verlauf der Kettenlinie KL vorliegt, wenn die Kette mit einem der mittleren Ritzel in Eingriff steht. Die neutrale Kettenlinie entspricht dem idealen Verlauf der Kette, bei dem so gut wie kein Kettenschräglauf auftritt - siehe mittlere KL. Befindet sich die Kette auf dem kleinsten Ritzel 62 oder größten Ritzeln 61, ist der Kettenschräglauf entsprechend am Stärksten. Für diesen Fall muss das Kettenblatt 10 ausreichend steif ausgebildet sein, um die Kettenkräfte aufnehmen zu können. Das erfindungsgemäße Kettenrad 10 kann vor allem die Kräfte verursacht durch den Kettenschräglauf auf dem größten Ritzel 61 gut aufnehmen.

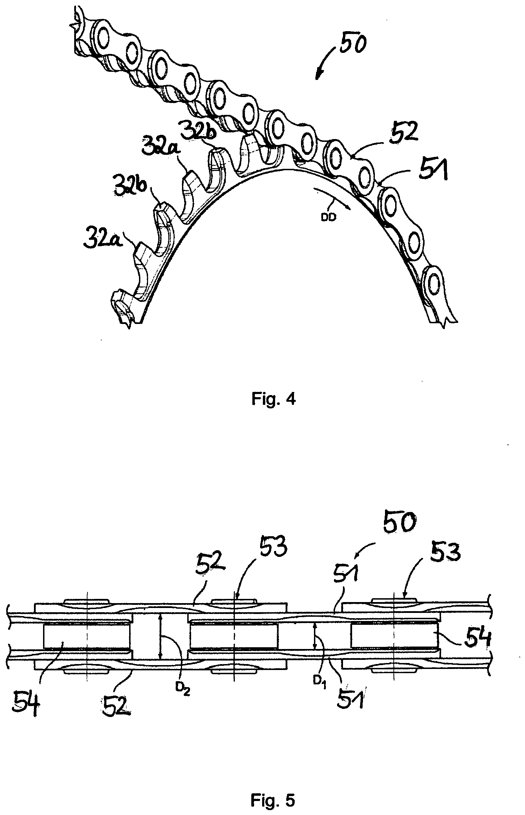

Figur 4 zeigt eine mit einem Kettenrad 10 in Eingriff stehende Rollenkette 50 mit Ketteninnenlaschenpaaren 51 und Kettenaußenlaschenpaaren 52. Die alternierenden dünnen und dicken Zähne 32a, 32b des Kettenblatts 10 stellen eine bereits bekannte Lösung zur Verbesserung der Kettenführung dar. Das Kettenrad 10 dreht sich in Antriebsrichtung DD.

Die in Figur 5 in der Draufsicht dargestellte Kette 50 besteht aus Ketteninnenlaschen und Kettenaußenlaschen. Jeweils zwei gegenüberliegende Innenlaschen bzw. Außenlaschen bilden ein Innenlaschenpaar 51 bzw. Außenlaschenpaar 52. Die Innenlaschen und Außenlaschen sind im Wechsel mit Kettenbolzen 53 gelenkig verbunden. Auf den Krägen der Innenlaschen sind Kettenrollen 54 drehbar gelagert. Die Ketteninnenlaschen eines Ketteninnenlaschenpaars 51 sind in einem axialen Abstand D1 zueinander angeordnet. Die Kettenaußenlaschen eines Kettenaußenlaschenpaars 52 sind in einem axialen Abstand D2 zueinander angeordnet. Dabei ist der Abstand D2 zwischen den Kettenaußenlaschen größer, als der Abstand D1 zwischen den Ketteninnenlaschen. Diese Abstände D1 und D2 definieren den Eingriffsraum für die Zähne 32 des Kettenrads 10. Um ein sauberes Eingreifen in die Kette 50 zu ermöglichen, müssen die axialen Breiten der Zähne 32 des Kettenrads 10 auf die Abstände D1 und D2 abgestimmt sein. Beispielsweise ist D1 mit 2,16 mm und D2 mit 3,65 mm bemessen.

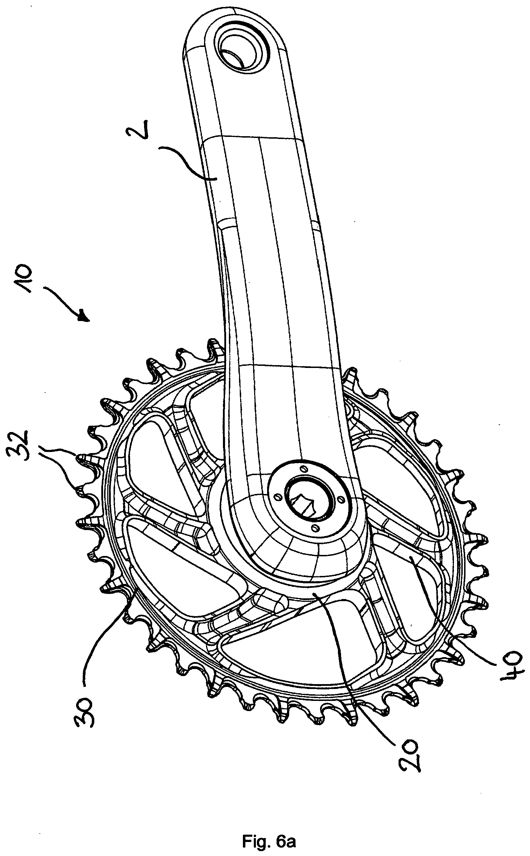

Figur 6a zeigt eine perspektivische Außenansicht einer Ausführungsform eines an der rechten Tretkurbel 2 montierten Einzel-Kettenblatts 10. Das Kettenblatt 10 weist an seinem radialen Innenbereich einen Nabenbereich 20 und an seinem radialen Außenbereich einen Zahnbereich 30 mit einer Vielzahl von Zähnen 32 auf. Zwischen dem Nabenbereich 20 und dem Zahnbereich 30 erstreckt sich der Verbindungsbereich 40. Das Kettenblatt 10 besteht in radialer Richtung gesehen also aus einem Nabenbereich 30, einem Verbindungsbereich 40 und einem Zahnbereich 30.

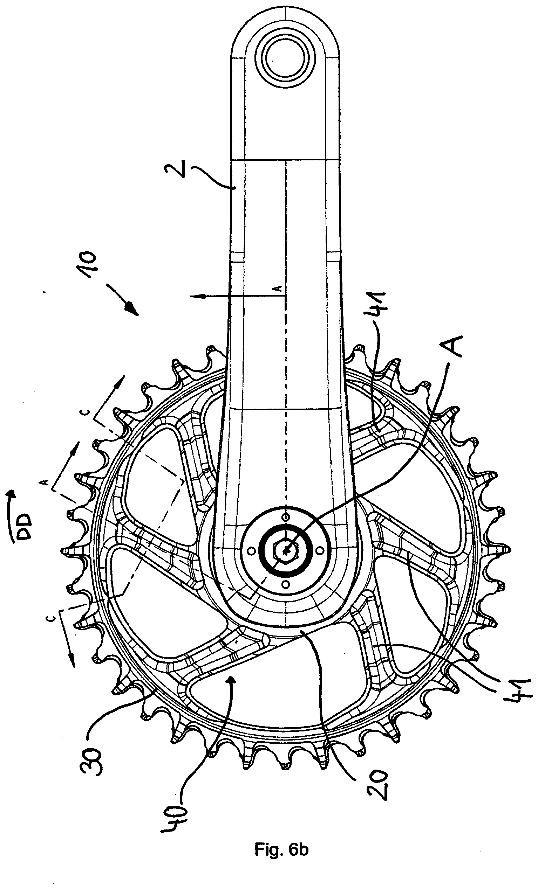

Aus der Außenansicht der Tretkurbelanordnung in Figur 6b wird deutlich, dass der Verbindungsbereich 40 dieser Ausführungsform eine Anzahl von sechs Armen 41 umfasst. Die Kurbelanordnung, bestehend aus der Kurbel 2 und dem Kettenblatt 10, dreht sich um die Drehachse A in die Antriebsrichtung DD. Die Arme 41 im Verbindungsbereich 40 sind relativ zur Tretkurbel 2 so angeordnet, dass der obere und untere Totpunkt der Kurbelanordnung berücksichtigt wird. Der Verbindungsbereich 40 ist in den Bereichen der Totpunkte frei von Armen 41, weil hier nur wenig Kraft von der Kurbel 2 auf das Kettenblatt 10 übertragen wird. Die Auslegung des Kettenblatts 10 kann in diesen Bereichen entsprechend offen und leicht gestaltet sein. In den Bereichen außerhalb der Totpunkte, in denen die auf die Kurbel 2 wirkende Pedalkraft hoch ist, muss das Kettenblatt 10 insbesondere der Verbindungsbereich 40 entsprechend stabil ausgebildet sein. Jeweils drei Arme 41 sind in diesen beiden Bereichen außerhalb der Totpunkte angeordnet. Die gezeigte Anordnung von sechs Armen 41 hat sich als eine besonders stabile und gleichzeitig leichte Konstruktion erwiesen. Die Pedalkraft wird über die Tretkurbel 2 auf den Nabenbereich 30 des Kettenblatts 10 übertragen. Von hier wird die Kraft über die Arme 41 auf den Zahnbereich 30 und weiter auf eine hier nicht gezeigte Kette übertragen. Auf die Schnitte entlang der eingezeichneten Linien A-A und C-C wird im Folgenden eingegangen.

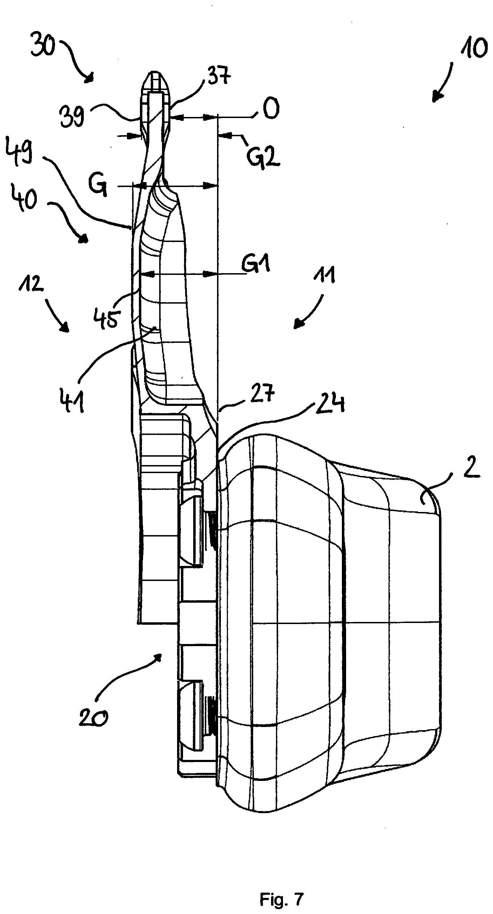

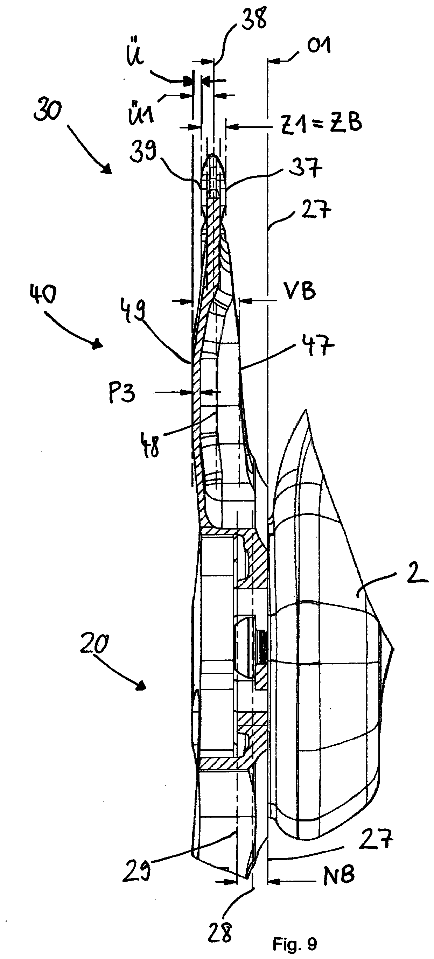

Figur 7 zeigt eine vergrößerte Schnittdarstellung durch die Tretkurbelanordnung aus Figur 6b entlang der Linie A-A. Hier wird die Anordnung der Bereiche 20, 30, 40 des Kettenblatts 10 in axialer Richtung deutlich. Das Kettenblatt 10 hat eine Außenseite 11, welche in Richtung der Kurbel 2 weist, und eine dieser gegenüberliegenden Innenseite 12. Die Bereiche 20, 30, 40 weisen jeweils eine axiale Innenebene 29, 39, 49 auf der Innenseite 12 des Kettenblatts 10, eine axiale Außenebene 27, 37, 47 auf der Außenseite 11 des Kettenblatts 10 und eine dazwischen liegende axiale Mittelebene 28, 38, 48 auf. Die Innenebenen 29, 39, 49 werden jeweils durch die in axialer Richtung am weitesten innen liegenden Oberflächen des jeweiligen Bereichs 20, 30, 40 definiert. Die Außenebenen 27, 37, 47 werden jeweils durch die in axialer Richtung am weitesten außen liegenden Oberflächen des jeweiligen Bereichs 20, 30, 40 definiert. Die entsprechenden Mittelebenen 28, 38, 48 liegen jeweils mittig dazwischen (vgl. auch Figur 9). Der Zahnbereich 30 ist um ein variierendes Versatzmaß O gegenüber dem Nabenbereich 20 nach innen versetzt (Axialversatz oder auch offset genannt). Gemessen von der Zahnaußenebene 37 bis zur Nabenaußenebene 27 auf der Außenseite 11 des Kettenrads 10 beträgt das Maß O des Axialversatzes beispielsweise 6,15 mm.

Die axiale Gesamtbreite G des Kettenblatts 10 wird gemessen von der Nabenaußenebene 27 bis zur Verbindungsinnenebene 49 und entspricht der maximalen Breite des Kettenblatts 10. Die Gesamtbreite G beträgt beispielsweise 10,9 mm. Um Gewicht zu sparen, ist die Materialstärke des profilierten Arms 41 möglichst gering gewählt. Die axiale Breite G1 - von der Nabenaußenebene 27 bis zum Profilboden 45 des Arms 41 gemessen - beträgt beispielsweise 9,9 mm. Das heißt, die Materialstärke des Arms 41 am Profilboden 45 beträgt nur 1 mm, was im Vergleich zur Gesamtbreite G sehr gering ist. Die axiale Breite G2 gemessen von der Nabenaußenebene 27 bis zur Zahninnenebene 39 ist geringer als die axiale Gesamtbreite G. Die axiale Breite G2 beträgt beispielsweise 9,75 mm. Somit ergibt sich, dass die Verbindungsinnenebene 49 axial weiter innen als die Zahninnenebene 39 verläuft. Mit anderen Worten hängt der Verbindungsbereich 40 in axialer Richtung nach innen über den Zahnbereich 30. Der axiale Überhang Ü nach innen beträgt in diesem Beispielsfall 1,15 mm (10,9 mm minus 9,75 mm) - vgl. auch Figur 9. Die Nabenaußenebene 27 verläuft durch die Anschlagsfläche 24 des Nabenbereichs 20 für die Kurbel 2.

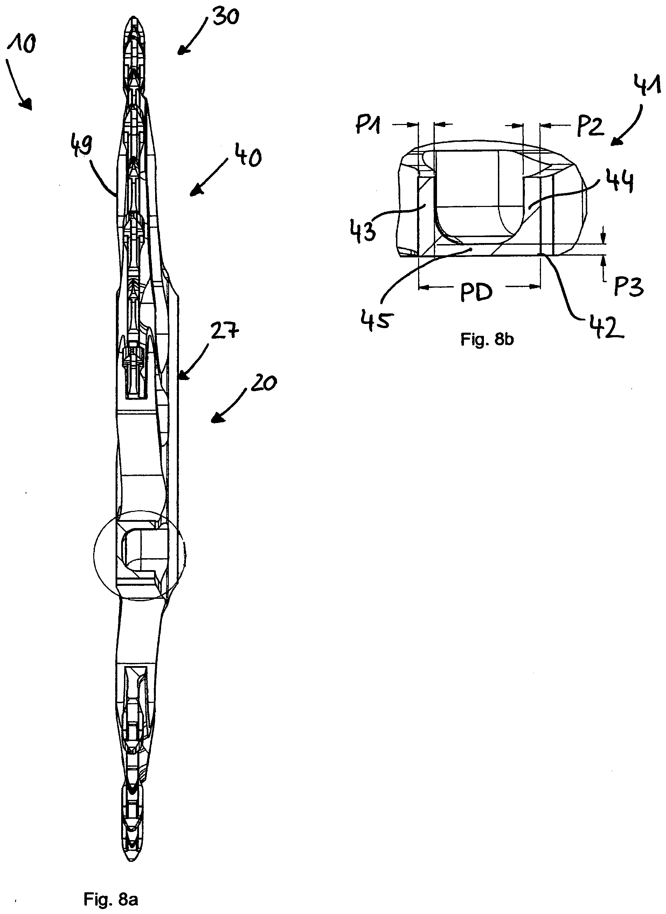

Figur 8a zeigt eine vergrößerte Schnittdarstellung durch die Tretkurbelanordnung aus Figur 6b entlang der Linie C-C. Der eingekreiste Detailausschnitt zeigt einen Querschnitt durch den profilierten Arm 41 und ist in Figur 8b vergrößert dargestellt. Mit diesen Darstellungen wird das Verhältnis zwischen der vergleichsweise großen axialen Gesamtbreite G des Kettenblatts 10 gemessen von der Nabenaußenebene 27 bis zur Verbindungsinnenebene 39 und der vergleichsweise geringen Materialstärke des Armprofils 42 deutlich. Der Arm 41 weist ein dünnwandiges, u-förmiges Profil 42 auf. Das Profil 42 hat eine erste und zweite Profilwand 43, 44, die mit einem Profilboden 45 verbunden sind. Die Materialstärke P1, P2 der Profilwände 43, 44 und die Materialstärke P3 des Profilbodens 45 sind in etwa gleich groß. Beispielsweise könnte die Materialstärke des Profils 42 etwa 1 mm bis 1,5 mm betragen. Im Vergleich zur Gesamtbreite G von etwa 10,9 mm ist dies gering. Auch im Vergleich zur maximalen Profilbreite VB des Armprofils 42 im Verbindungsbereich 40, gemessen von der Verbindungsinnenebene 49 bis zur Verbindungsaußenebene 47, ist die Materialstärke des Armprofils 42 gering bemessen - vgl. hierzu Figur 9).

Die Profilbreite VB des Arms 41 nimmt in Richtung des Außenrings 31 des Zahnbereichs 30 ab. Aufgrund des größeren Hebelarms bzw. des größeren Abstands zum Zahnbereich 30, wo die Kettenkräfte angreifen, muss der Querschnitt der Arme 41 in Richtung Nabenbereich 20 größer bemessen sein, als in Richtung des Zahnbereichs 30. Außerdem wirken die profilierten Arme 41 in Antriebsrichtung DD als Druckstäbe. Die Profildicke PD des Arms 41 ist entsprechend auf die Steifigkeitsanforderungen in Antriebsrichtung ausgelegt.

Figur 9 zeigt einen weiteren Schnitt durch die Kurbelanordnung aus Figur 6b. Hier sind unter anderem für die Bereiche 20, 30, 40 jeweils die maximalen axialen Breiten NB, VB, ZB, gemessen von der jeweiligen Innenebene 29, 39, 49 zur jeweiligen Außenebene 27, 37, 47 eingezeichnet. Auch die Mittelebenen 28, 38, 48 sind zwischen den jeweiligen Innen- und Außenebenen als Strichlinien eingezeichnet. Die Nabenaußenebene 27 liegt in axialer Richtung A weiter außen als die Verbindungsaußenebene 47 und die Zahnaußenebene 37. Die Verbindungsaußenebene 47 liegt axial weiter außen als die Zahnaußenebene 37. Die Nabeninnenebene 29 liegt in axialer Richtung A weiter außen als die Zahninnenebene 39 und die Verbindungsinnenebene 49. Allerdings liegt die Verbindungsinnenebene 49 axial weiter innen als die Zahninnenebene 39. Dies erzeugt den axialen Überhang Ü im Verbindungsbereich 40. Gemessen von der Verbindungsinnenebene 49 bis zur Zahnmittelebene 38 ist der Überhang als Ü1 eingezeichnet.

Die Zahnmittelebene 38 und die Verbindungsmittelebene 48 liegen eng beieinander. Je näher die Mittelebenen 38, 48 zusammenliegen, desto ausgewogener kann der Schräglauf in beide axialen Richtungen - sowohl am kleinsten Ritzel 62 nach außen, als auch am größten Ritzel 61 nach innen - aufgenommen werden. Vergleiche zum Schräglauf Figur 3. Je nachdem in welche Richtung die Mittelebenen 38, 48 zueinander versetzt verlaufen, desto mehr kann der Schräglauf in die eine oder andere axiale Richtung aufgenommen werden. Im gezeigten Fall verläuft die Verbindungsmittelebene 48 leicht nach axial außen versetzt zur Zahnmittelebene 38. Diese Anordnung erlaubt es, den Innenschräglauf auf dem größten Ritzel 61 aufzunehmen, welcher bei Ritzelanordnungen mit einer erhöhten Anzahl von Ritzeln am stärksten ausgeprägt ist.

Der Nabenbereich 20 weist eine axiale Breite NB auf, welche von der Nabenaußenebene 27 bis zur Nabeninnenebene 29 bemessen wird. Der Verbindungsbereich 40 weist eine maximale axiale Breite VB auf, welche von der Verbindungsaußenebene 47 bis zur Verbindungsinnenebene 49 bemessen wird. Der Zahnbereich 30 weist eine maximal axiale Breite ZB auf, welche von der Zahnaußenebene 37 bis zur Zahninnenebene 39 bemessen wird, und in diesem Fall der Zahnbreite Z1 des dicken Zahns 32b entspricht. Die axiale Breite VB im Verbindungsbereich 40 ist, um die Steifigkeit zu erhöhen, besonders groß. Insbesondere erstreckt sich der Verbindungsbereich 40 in axialer Richtung sogar über die Zahninnenebene 39 um das Überhangmaß Ü hinaus. Die axiale Breite VB im Verbindungsbereich 40 ist deutlich größer bemessen als die axiale Breite NB, ZB des Nabenbereichs 20 und des Zahnbereichs 30. Gleichzeitig ist die Materialstärke P des Armprofils 42 im Verbindungsbereich 40 möglichst gering gewählt, um das Gewicht niedrig zu halten. Hier wird der Axialversatz O1 des Zahnbereichs 30 relativ zum Nabenbereich 20, alternativ von der Nabenaußenebene 27 bis zur Zahnmittelebene 38 gemessen. Ebenso kann der Überhang U1 des Verbindungsbereichs 40 von der Verbindungsinnenebene 49 bis zur Zahnmittelebene 38 bemessen werden. Die Maße O1 und Ü1 erhöhen sich gegenüber den Maßen O und Ü entsprechend um eine halbe Zahnbreite.

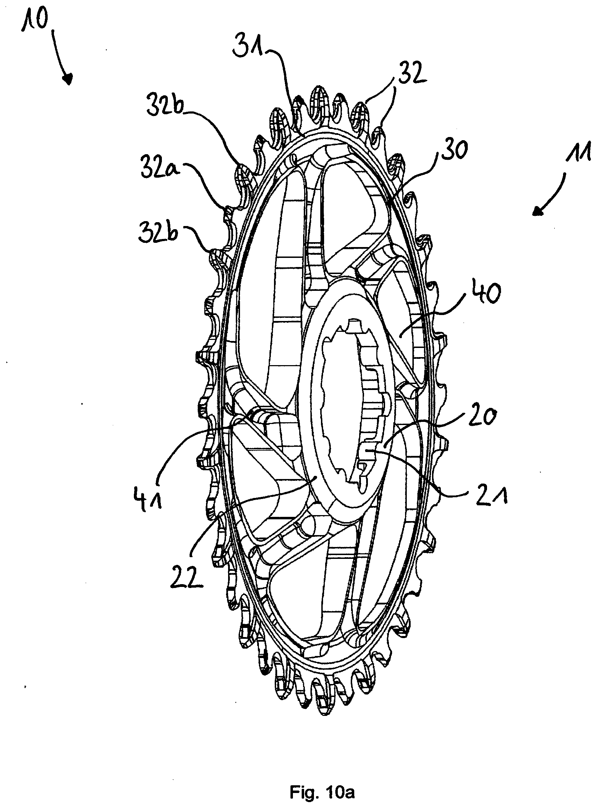

In den Figuren 10a bis 10e wird der Kettenring 10 in verschiedenen Ansichten gezeigt. In radialer Richtung reihen sich der Nabenbereich 20, der Verbindungsbereich 40 und der Zahnbereich 30 aneinander. Der Verbindungsbereich 40 verbindet den Nabenbereich 20 mit dem Zahnbereich 30.

Der Nabenbereich 20 weist an seinem radial inneren Ende ein Innenprofil 21 zur Drehmomentübertragung von der Tretkurbel auf das Kettenrad 10 auf. Der Zahnbereich 30 weist am radial äußeren Ende des Kettenblatts 10 eine Vielzahl von Zähnen 32 auf. Im gezeigten Beispiel ist eine gerade Anzahl von 36 Zähnen angeordnet, welche eine erste Gruppe von Zähnen 32a und eine zweite Gruppe von Zähnen 32b umfasst. Die Zähne 32a der ersten Gruppe sind in axialer Richtung schmäler als die Zähne 32b der zweiten Gruppe ausgebildet. Die breiten Zähne 32b sind so bemessen, dass sie ausschließlich zum Eingriff in Kettenaußenlaschenpaare 52 geeignet sind. Die schmalen Zähne 32a sind entsprechend schmäler und deshalb auch zum Eingriff in Innenlaschenpaare 51 geeignet. Bei Ausführungen mit unterschiedlich dicken Zähnen 32 definieren die in axialer Richtung A am weitesten innen liegenden Oberflächen der dicken Zähne 32b die Zahninnenebene 39.

Der Verbindungsbereich 40 ist durch die Arme 41 gebildet. Die Arme 41 verbinden den Nabenbereich 20 mit dem Zahnbereich 30. Der Raum zwischen den Armen 41 ist frei von Material, um Gewicht zu sparen. Genauer gesagt erstrecken sich die Arme 41 zwischen dem Innenring 22 des Nabenbereichs 20 und einem Außenring 31 des Zahnbereichs 30. Die Arme 41 nehmen vom Nabenbereich 20 zum Zahnbereich 30 hin sowohl in der Breite (in axialer Richtung), als auch in der Dicke ab. Der Innenring 22 des Nabenbereichs 20 ist benachbart zum Innenprofil 21 angeordnet. Der Außenring 31 des Zahnbereichs 30 ist radial innerhalb der Zähne 32 angeordnet.

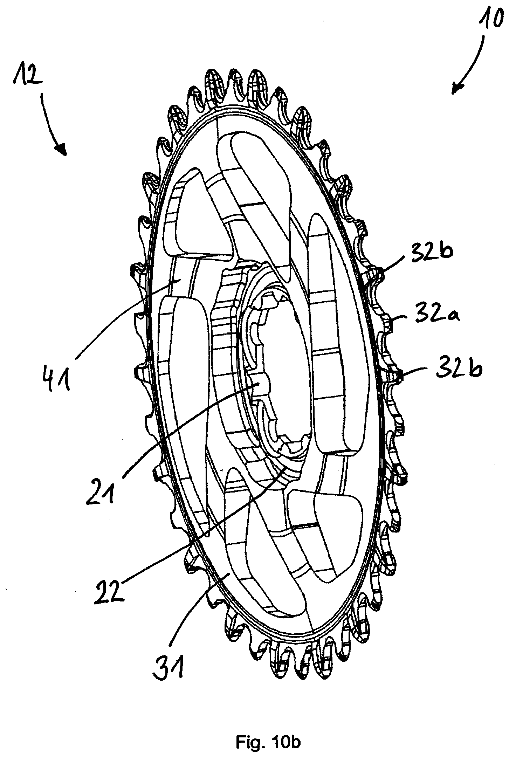

In den perspektivischen Ansichten in Figur 10a und 10b werden die unterschiedlich breiten Zähne 32a, 32b und das u-förmige Profil der Arme 41 deutlich.

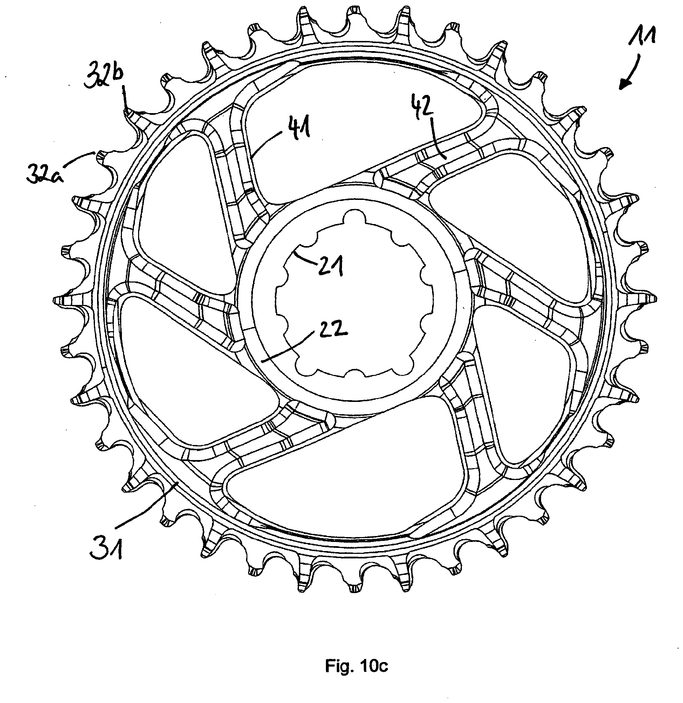

Aus den Figuren 10c und 10d ist ersichtlich, dass die breiteren Zähne 32b auch in radialer Richtung länger als die schmalen Zähne 32a ausgebildet sind. Die Zähne der ersten Gruppe 32a sind also sowohl in axialer, als auch in radialer Richtung geringer als die Zähne der zweiten Gruppe 32b bemessen. Dies wirkt sich positiv auf die Kettenführungseigenschaften aus. Figur 10c zeigt die Außenseite 11 des Kettenblatts 10 mit dem nach außen geöffneten u-förmigen Profil 42 der sechs Arme 41. Figur 10d zeigt die Innenseite 12 des Kettenblatts 10. Figur 10d zeigt eine Draufsicht des Kettenblatts 10 mit den Bereichen 20, 30, 40.

Die hier gezeigten Kettenblätter 10 sind kreisrund ausgebildet. Es wäre jedoch auch möglich, das Kettenblatt nicht kreisförmig, sondern beispielsweise oval auszubilden. Solche ovalen Kettenblätter minimieren die weniger wirksamen Bereiche bzw. Totpunkte der Kurbelanordnung. Die erfindungsgemäße Ausgestaltung des Verbindungsbereichs ist auch auf solche ovalen Kettenblätter zur Erhöhung der Steifigkeit anwendbar.

Die Figuren 11a und 11b zeigen eine Außen- und eine Innenansicht eines vergrößerten Teilausschnitts des Kettenblatts 10. Zwischen jeweils zwei benachbarten Zähnen 32 ist ein Zahngrund 35 angeordnet. Tangential zu den Zahngründen 35 verläuft der Fußkreisdurchmesser 36. Die dicken Zähne 32b der zweiten Zahngruppe weisen Verdickungen 34 auf. Die dünnen Zähne 32a sind frei von Verdickungen. Diese Verdickungen 34 erstrecken sich in radialer Richtung von der Zahnspitze 33 über den Zahnfuß bis über den Fußkreisdurchmesser 36 hinweg. Mit anderen Worten erstrecken sich die Verdickungen 34 der dicken Zähne 32b in radialer Richtung bis unterhalb des Zahngrunds 35. Diese gegenüber bekannten Ausführungen in radialer Richtung deutlich länger ausgebildete Verdickung 34 und das damit gewonnene Material macht den Zahn 32b stabiler. Wie sich aus den Figuren 11a bis 11b ergibt, ist die Verdickung 34 insbesondere gleichermaßen auf der Außenseite 11 und auf der Innenseite 12 des Kettenrads 10 bzw. des Zahns 32b ausgebildet und erstreckt sich somit auf beiden Seiten von der Zahnspitze 33 bis unterhalb des Fußkreisdurchmessers 36. Das restliche Material im Bereich der Zähne 32 und des Außenrings 31 kann beispielsweise durch Fräsen auf das Maß der schmalen Zähne 32a abgetragen werden. Dies spart weiter Gewicht ein. Der Kettenring 10 kann aus Aluminium durch spanende Verarbeitung beispielsweise durch Fräsen präzise und leicht hergestellt werden. Die Querschnittsvergrößerung der Profilarme 41 im Verbindungsbereich 40 über die Zahninnenebene 39 hinaus, erlaubt eine besonders geringe Materialstärke des Profils bei ausreichender Steifigkeit. Der Kettenring 10 ist ausreichend stabil und möglichst leichtgewichtig.

## Patentansprüche

1. Einfach-Kettenrad (10) zur Montage an einer um eine Drehachse (A) drehbar gelagerten Tretkurbel (2) eines Fahrrades und zum Eingriff in eine Fahrradkette (50) mit Ketteninnenlaschenpaaren (51) und Kettenaußenlaschenpaaren (52) aufweisend:
eine axiale Außenseite (11),
eine axiale Innenseite (12),
einen Nabenbereich (20) mit einem Innenprofil (21) am radial inneren Ende des Kettenrades (10) zur Drehmomentübertragung von der Tretkurbel (2) auf das Kettenrad (10),
wobei der Nabenbereich (20) eine axiale Nabenmittelebene (28) zwischen einer Nabenaußenebene (27) und einer Nabeninnenebene (29) definiert,
einen Zahnbereich (30) mit einer Vielzahl von Zähnen (32) an einem radial äußeren Ende des Kettenrades (10) zum Eingriff in die Fahrradkette (50),
wobei der Zahnbereich (30) eine axiale Zahnmittelebene (38) zwischen einer Zahnaußenebene (37) und einer Zahninnenebene (39) definiert, und
die Zahninnenebene (39) durch die in axialer Richtung (A) am weitesten innen liegenden Oberflächen der Vielzahl von Zähnen (32) definiert ist,
einen Verbindungsbereich (40), der sich in radialer Richtung zwischen dem Nabenbereich (20) und dem Zahnbereich (30) des Kettenrades (10) erstreckt und diese miteinander verbindet,
wobei der Verbindungsbereich (40) eine Verbindungsmittelebene (48) zwischen einer Verbindungsaußenebene (47) und einer Verbindungsinnenebene (49) definiert, und
die Verbindungsinnenebene (49) durch die in axialer Richtung (A) am weitesten innen liegenden Oberflächen des Verbindungsbereichs (40) definiert ist,
wobei die Zahnmittelebene (38) in axialer Richtung (A) nach innen versetzt zu der Nabenmittelebene (28) verläuft,
wobei zur Erhöhung der Steifigkeit des Kettenrades (10) die Verbindungsinnenebene (49) des Verbindungsbereichs (40) in axialer Richtung (A) nach innen versetzt zu der Zahninnenebene (39) des Zahnbereichs (30) verläuft, und
der Verbindungsbereich (40) von einer Mehrzahl von Armen (41) gebildet ist, welche sich vom Nabenbereich (20) zum Zahnbereich (30) erstrecken und diese miteinander verbinden,
**dadurch gekennzeichnet,**
**dass** die Arme (41) im Querschnitt profilträgerförmig ausgebildet sind.

2. Kettenrad (10) nach Anspruch 1,
wobei die Arme (41) einen dünnwandigen offenen Querschnitt (42) aufweisen, dessen Wandstärke (P3) relativ zur axialen Breite (VB) des Verbindungsbereichs (40) gering ist.

3. Kettenrad (10) nach Anspruch 2,
wobei der Querschnitt (42) der Arme (41) im Wesentlichen u-förmig ausgebildet ist.

4. Kettenrad (10) nach Anspruch 3,
wobei der u-förmige Querschnitt (42) zur Außenseite (11) des Kettenrades (10) offen und zur Innenseite (12) des Kettenrades (10) geschlossen ist.

5. Kettenrad (10) nach einem der vorhergehenden Ansprüche,
wobei die Vielzahl von Zähnen (32) eine erste Gruppe von Zähnen (32a) und eine zweite Gruppe von Zähnen (32b) umfasst.

6. Kettenrad (10) nach Anspruch 5,
wobei die erste Gruppe von Zähnen (32a) eine erste axiale Breite (Z1) aufweist, die zweite Gruppe von Zähnen (32b) eine zweite axiale Breite (Z2) aufweist und die zweite axiale Breite (Z2) größer ist als die erste axiale Breite (Z1).

7. Kettenrad (10) nach Anspruch 6,
wobei die erste axiale Breite (Z1) der ersten Gruppe von Zähnen (32a) geringer als ein Ketteninnenlaschenabstand (D1) eines Ketteninnenlaschenpaares (51) bemessen ist, und
die zweite axiale Breite (Z2) der zweiten Gruppe von Zähnen (32b) größer als der Ketteninnenlaschenabstand (D1) und kleiner als ein Außenlaschenabstand (D2) eines Außenlaschenpaares (52) bemessen ist.

8. Kettenrad (10) nach Anspruch 7,
wobei die Zähne der zweiten Gruppe von Zähnen (32b) jeweils einen axialen Vorsprung (34) aufweisen, welcher sich in radialer Richtung von der Zahnspitze (33) bis über den Fußkreisdurchmesser (36) hinweg erstreckt.

9. Kettenrad (10) nach Anspruch 8,
wobei der axiale Vorsprung (34) an den Zähnen der zweiten Gruppe von Zähnen (32b) jeweils an der Außenseite (11) und/oder der Innenseite (12) ausgebildet ist.

10. Kettenrad (10) nach einem der Ansprüche 5 bis 9,
wobei die ersten Zähne der ersten Gruppe (32a) in radialer Richtung kürzer als die Zähne der zweiten Gruppe (32b) ausgebildet sind.

## Claims

1. Single sprocket (10) for mounting on a pedal crank (2), which is mounted rotatably about an axis of rotation (A), of a bicycle, and for engaging in a bicycle chain (50) with chain inner link plate pairs (51) and chain outer link plate pairs (52), having:
an axial outer side (11),
an axial inner side (12),
a hub region (20) with an inner profile (21) at the radially inner end of the sprocket (10) for transmitting torque from the pedal crank (2) to the sprocket (10),
wherein the hub region (20) defines an axial hub centre plane (28) between a hub outer plane (27) and a hub inner plane (29),
a tooth region (30) with a multiplicity of teeth (32) at a radially outer end of the sprocket (10) for the purpose of engaging in the bicycle chain (50),
wherein the tooth region (30) defines an axial tooth centre plane (38) between a tooth outer plane (37) and a tooth inner plane (39), and
the tooth inner plane (39) is defined by the surfaces,
lying furthermost on the inside in the axial direction (A), of the multiplicity of teeth (32),
a connecting region (40) which extends in the radial direction between the hub region (20) and the tooth region (30) of the sprocket (10) and connects said regions to one another,
wherein the connecting region (40) defines a connecting centre plane (48) between a connecting outer plane (47) and a connecting inner plane (49), and
the connecting inner plane (49) is defined by the surfaces, lying furthermost on the inside in the axial direction (A), of the connecting region (40),
wherein the tooth centre plane (38) runs in a manner offset inwards in the axial direction (A) with respect to the hub centre plane (28),
wherein, in order to increase the rigidity of the sprocket (10), the connecting inner plane (49) of the connecting region (40) runs offset inwards in the axial direction (A) with respect to the tooth inner plane (39) of the tooth region (30), and
the connecting region (40) is formed by a plurality of arms (41) which extend from the hub region (20) to the tooth region (30) and connect said regions to one another,
**characterized in that**
the arms (41) are designed in cross section in the shape of a profile carrier.

2. Sprocket (10) according to Claim 1,
wherein the arms (41) have a thin-walled open cross section (42), the wall thickness (P3) of which is small relative to the axial width (VB) of the connecting region (40) .

3. Sprocket (10) according to Claim 2,
wherein the cross section (42) of the arms (41) is of substantially U-shaped design.

4. Sprocket (10) according to Claim 3,
wherein the U-shaped cross section (42) is open towards the outer side (11) of the sprocket (10) and is closed towards the inner side (12) of the sprocket (10).

5. Sprocket (10) according to one of the preceding claims,
wherein the multiplicity of teeth (32) comprise a first group of teeth (32a) and a second group of teeth (32b).

6. Sprocket (10) according to Claim 5,
wherein the first group of teeth (32a) has a first axial width (Z1), the second group of teeth (32b) has a second axial width (Z2), and the second axial width (Z2) is greater than the first axial width (Z1).

7. Sprocket (10) according to Claim 6,
wherein the first axial width (Z1) of the first group of teeth (32a) is smaller than a chain inner link plate spacing (D1) of a chain inner link plate pair (51), and the second axial width (Z2) of the second group of teeth (32b) is greater than the chain inner link plate spacing (D1) and smaller than an outer link plate spacing (D2) of an outer link plate pair (52).

8. Sprocket (10) according to Claim 7,
wherein the teeth of the second group of teeth (32b) each have an axial projection (34) which extends in the radial direction from the tooth tip (33) to beyond the root diameter (36).

9. Sprocket (10) according to Claim 8,
wherein the axial projection (34) on the teeth of the second group of teeth (32b) is in each case formed on the outer side (11) and/or on the inner side (12).

10. Sprocket (10) according to one of Claims 5 to 9, wherein the first teeth of the first group (32a) in the radial direction are shorter than the teeth of the second group (32b).

## Revendications

1. Roue dentée simple (10) destinée à être montée sur une manivelle de pédalier (2), montée pivotante autour d'un axe de rotation (A), d'une bicyclette et destinée à s'engrener dans une chaîne de bicyclette (50) dotée de paires de plaques intérieures de chaîne (51) et de paires de plaques extérieures de chaîne (52) présentant :
un côté extérieur axial (11),
un côté intérieur axial (12),
une région de moyeu (20) dotée d'un profil intérieur (21) à l'extrémité radialement intérieure de la roue dentée (10) pour la transmission de couple de la manivelle de pédalier (2) à la roue dentée (10),
la région de moyeu (20) définissant un plan médian axial de moyeu (28) entre un plan extérieur de moyeu (27) et
un plan intérieur de moyeu (29),
une région dentée (30) dotée d'une pluralité de dents (32) à une extrémité radialement extérieure de la roue dentée (10) et destinée à s'engrener dans la chaîne de bicyclette (50),
la région dentée (30) définissant un plan médian axial de dents (38) entre un plan extérieur de dents (37) et
un plan intérieur de dents (39), et
le plan intérieur de dents (39) étant défini par les surfaces de la pluralité de dents (32) qui sont situées le plus à l'intérieur dans la direction axiale (A),
une région de connexion (40), qui s'étend dans la direction radiale entre la région de moyeu (20) et la région dentée (30) de la roue dentée (10) et connecte celles-ci l'une à l'autre,
la région de connexion (40) définissant un plan médian de connexion (48) entre un plan extérieur de connexion (47) et un plan intérieur de connexion (49), et le plan intérieur de connexion (49) étant défini par les surfaces de la région de connexion (40) qui sont situées le plus à l'intérieur dans la direction axiale (A),
le plan médian de dents (38) s'étendant de manière décalée vers l'intérieur dans la direction axiale (A) par rapport au plan médian de moyeu (28),
le plan intérieur de connexion (49) de la région de connexion (40) s'étendant de manière décalée vers l'intérieur dans la direction axiale (A) par rapport au plan intérieur de dents (39) de la région dentée (30) pour l'augmentation de la rigidité de la roue dentée (10), et
la région de connexion (40) étant formée par une pluralité de bras (41), lesquels s'étendent à partir de la région de moyeu (20) jusqu'à la région dentée (30) et connectent celles-ci l'une à l'autre,
**caractérisée en ce que**
les bras (41) sont réalisés en forme de support profilé en section transversale.

2. Roue dentée (10) selon la revendication 1,
les bras (41) présentant une section transversale ouverte (42) à paroi mince, dont l'épaisseur de paroi (P3) est faible par rapport à la largeur axiale (VB) de la région de connexion (40).

3. Roue dentée (10) selon la revendication 2,
la section transversale (42) des bras (41) étant réalisée sensiblement en forme de U.

4. Roue dentée (10) selon la revendication 3,
la section transversale (42) en forme de U étant ouverte par rapport au côté extérieur (11) de la roue dentée (10) et fermée par rapport au côté intérieur (12) de la roue dentée (10).

5. Roue dentée (10) selon l'une des revendications précédentes,
la pluralité de dents (32) comprenant un premier groupe de dents (32a) et un deuxième groupe de dents (32b).

6. Roue dentée (10) selon la revendication 5,
le premier groupe de dents (32a) présentant une première largeur axiale (Z1), le deuxième groupe de dents (32b) présentant une deuxième largeur axiale (Z2) et la deuxième largeur axiale (Z2) étant supérieure à la première largeur axiale (Z1).

7. Roue dentée (10) selon la revendication 6,
la première largeur axiale (Z1) du premier groupe de dents (32a) étant dimensionnée de manière inférieure à un écartement de plaques intérieures de chaîne (D1) d'une paire de plaques intérieures de chaîne (51), et la deuxième largeur axiale (Z2) du deuxième groupe de dents (32b) étant dimensionnée de manière supérieure à l'écartement de plaques intérieures de chaîne (D1) et inférieure à un écartement de plaques extérieures (D2) d'une paire de plaques extérieures (52).

8. Roue dentée (10) selon la revendication 7,
les dents du deuxième groupe de dents (32b) présentant respectivement une saillie axiale (34), laquelle s'étend dans la direction radiale à partir de la pointe de dent (33) jusqu'au-delà du diamètre de cercle de pied (36).

9. Roue dentée (10) selon la revendication 8,
la saillie axiale (34) sur les dents du deuxième groupe de dents (32b) étant réalisée respectivement sur le côté extérieur (11) et/ou le côté intérieur (12).

10. Roue dentée (10) selon l'une des revendications 5 à 9,les premières dents du premier groupe (32a) étant réalisées de manière plus courte dans la direction radiale que les dents du deuxième groupe (32b).
